# EUROPÄISCHE PATENTSCHRIFT

(11) **EP 1 537 755 B1**
(45) Veröffentlichungstag und Bekanntmachung des Hinweises auf die Patenterteilung: **24.05.2006**
(21) Anmeldenummer: 03767604.6
(22) Anmeldetag: 21.11.2003
(51) Int. Cl.: H04Q 7/32

(54) **VERFAHREN ZUM BETREIBEN VON ENDGERÄTEN EINES MOBILFUNKKOMMUNIKATIONSSYSTEMS**
METHOD FOR OPERATING TERMINALS OF A MOBILE RADIO COMMUNICATION SYSTEM
PROCEDE PERMETTANT DE FAIRE FONCTIONNER LES TERMINAUX D'UN SYSTEME DE RADIOCOMMUNICATION MOBILE

(30) Priorität: 25.02.2003 DE 10308012
(43) Veröffentlichungstag der Anmeldung: 08.06.2005
(73) Patentinhaber: SIEMENS AKTIENGESELLSCHAFT, 80333 München (DE)
(72) Erfinder: LUFT, Achim, 38120 Braunschweig (DE); ECKERT, Michael, 38122 Braunschweig (DE); CHOI, Hyung-Nam, 22117 Hamburg (DE)
(86) Internationale Anmeldenummer: PCT/EP2003/013093
(87) Internationale Veröffentlichungsnummer: WO 2004/077860

(56) Entgegenhaltungen:
- EP-A- 0 852 448
- WO-A-02/32178
- ALA-LAURILA J ET AL: "WIRELESS LAN ACCESS NETWORK ARCHITECTURE FOR MOBILE OPERATORS" IEEE COMMUNICATIONS MAGAZINE, IEEE SERVICE CENTER. PISCATAWAY, N.J, US, Bd. 39, Nr. 11, November 2001 (2001-11), Seiten 82-89, XP001107810 ISSN: 0163-6804
- "Digital cellular telecommunications system (Phase 2+);Specification of the Subscriber Identity Module - Mobile Equipment (SIM - ME) interface (GSM 11.11 version 7.6.1 Release 1998); ETSI TS 100 977" ETSI STANDARDS, EUROPEAN TELECOMMUNICATIONS STANDARDS INSTITUTE, SOPHIA-ANTIPO, FR, Bd. 3-T3;SMG9, Nr. V761, August 2000 (2000-08), XP014005888 ISSN: 0000-0001
- "Universal Mobile Telecommunications System (UMTS);Characteristics of the USIM Application (3GPP TS 31.102 version 5.3.0 Release 5); ETSI TS 131 102" ETSI STANDARDS, EUROPEAN TELECOMMUNICATIONS STANDARDS INSTITUTE, SOPHIA-ANTIPO, FR, Bd. 3-T3, Nr. V530, Dezember 2002 (2002-12), XP014009719 ISSN: 0000-0001 in der Anmeldung erwähnt
- "Digital cellular telecommunications system (Phase 2+);Universal Mobile Telecommunications System (UMTS); Numbering, Addressing and Identification (3GPP TS 23.003 version 5.5.1 Release 5); ETSI TS 123 003" ETSI STANDARDS, EUROPEAN TELECOMMUNICATIONS STANDARDS INSTITUTE, SOPHIA-ANTIPO, FR, Bd. 3-CN2;3-CN4, Nr. V551, Januar 2003 (2003-01), XP014007385 ISSN: 0000-0001

## Beschreibung

Die Erfindung betrifft ein Verfahren zum Betreiben von Endgeräten eines Mobilfunkkommunikationssystems gemäß dem Oberbegriff des Anspruchs 1.

Informations- und Kommunikationsnetze konvergieren in einem zunehmenden Maße. Daher besteht auch die Bestrebung, Funkkommunikationssysteme der sogenannten dritten Generation (3G), wie beispielsweise UMTS (Universal Mobile Telecommunications System) oder andere Systeme, derart zu gestalten, dass auch eine möglichst unkomplizierte Anbindung an Datennetzen möglich ist.

So wird beispielsweise in den 3GPP-Standardisierungsgremien die Anbindung von WLAN (Wireless Local Area Network) in UMTS diskutiert. Für eine derartige Anbindung besteht aufgrund der technischen Möglichkeiten von WLAN ein großes Interesse. Beispielsweise um als Ergänzung zu UMTS in kleinen, lokalen Bereichen wie Flughäfen, Hotels, mit großer Teilnehmerdichte zum Teil öffentliche, kostenlose WLAN Zugangspunkte, sogenannte "Hot-Spots", zu nutzen.

Hierbei werden verschiedene WLAN-Technologien betrachtet, die einen breitbandigen Funkzugang zu den Breitband-Datennetzen ermöglichen, die auf TCP/IP, ATM oder B-ISDN basieren. Beispiele für Breitband-WLAN-Technologien sind IEEE 802.11a, IEEE 802.11b, Hiperlan/2, OpenAir oder SWAP. Eine Beschränkung auf eine bestimmte WLAN Technologie ist jedoch nicht festgelegt, so dass im Folgenden vereinfachend die Bezeichnung WLAN verwendet wird.

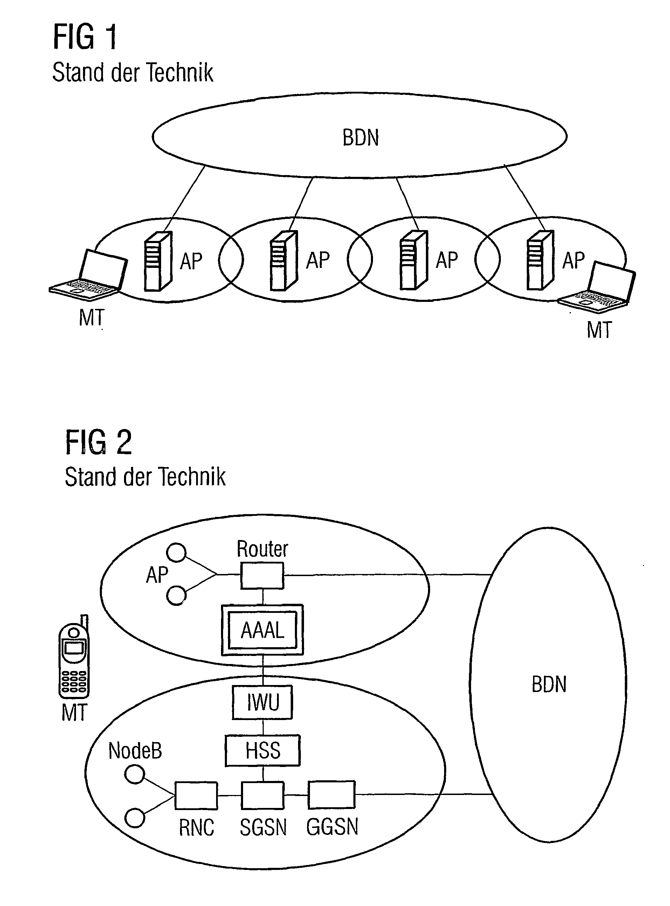

In Figur 1 ist das Grundprinzip von WLAN dargestellt. Mit WLAN kann man ein drahtloses lokales Kommunikationsnetz aufbauen, in welcher Mobile Terminals MT mittels Funk über sogenannte Access Points AP (WLAN-Basisstationen) an die Breitband-Datennetze BDN verbunden sind. Jeder Access Point AP versorgt alle in einer Zelle befindlichen Mobilen Terminals MT. Dabei kann die Zellengröße maximal bis zu einigen hundert Metern betragen. Prinzipiell kann mit WLAN ein zellulares Funknetz aufgebaut werden, in der bei Bewegung der Mobilen Terminals MT eine bestehende Datenverbindung von Access Point zu Access Point übergeben werden kann (Roaming). Die maximalen Datenraten sind abhängig von der jeweiligen WLAN-Technologie und können beispielsweise bis zu 54 Mbit/s betragen.

Für die Anbindung von WLAN in UMTS werden in den 3GPP-Standardisierungsgremien verschiedene Lösungsmöglichkeiten diskutiert. Ein Vorschlag stellt hierbei eine eher "lockere" Anbindung dar, bei der WLAN und UMTS eigenständige Systeme darstellen und die über eine sog. "Interworking-Einheit" IWU miteinander verbunden sind. In Figur 2 ist hierfür eine mögliche Netzarchitektur als Beispiel illustriert. Hierbei ist die Netzarchitektur von WLAN mit den Elementen AP, Router und AAAL dargestellt, während die Netzarchitektur von UMTS mit den Elementen UMTS-Basisstation NodeB, RNC, SGSN, GGSN und HSS dargestellt ist. Die Aufgabe der Interworking-Einheit IWU ist die Umsetzung von Signalisierungs- und Nutzerdaten von WLAN zu UMTS und umgekehrt. Die Lösung auf Basis einer IWU-Anbindung ist sehr vorteilhaft, weil hierdurch keine großen Änderungen in der Netzwerk- und Protokoll-Architektur von WLAN und insbesondere von UMTS durchzuführen sind. Im UMTS-Terminal kann die Implemetierung der WLAN-Anbindung durch ein entsprechendes Modul in der Form aussehen, dass das Modul entweder als WLAN-Funkteil bereits zusätzlich in das UMTS-Terminal integriert wird oder als WLAN-PC-Karte in die entsprechende Schnittstelle des Terminals, bspw. in Form einer PCMCIA-Schnittstelle, eingeschoben werden muss.

Aufgrund dem bevorzugten Anwendungsszenario von WLAN in den Hot-Spots wird angenommen, dass es zukünftig weltweit eine Vielzahl von öffentlichen als auch von privaten WLAN-Providern geben wird, die ihre Netze auch mit jeweils verschiedenen WLAN-Technologien betreiben. Ein Problem für UMTS-Terminals, die auch WLAN nutzen wollen, ist es für den jeweiligen WLAN-Zugang ein WLAN-Modul mit der entsprechenden Technologie haben zu müssen. Zudem ist es problematisch, dass sich das jeweilige UMTS-Terminal auch beim jeweiligen Netzprovider als Kunde einschreiben muss, sei es durch einen Vertrag oder dynamisch vor Ort.

Bei bestehenden WLAN Netzen genügt zur Nutzer-Authentifizierung in der Regel nur Name, Passwort und IP-Adresse. Des Weiteren erfolgt die Identifizierung und Authentifizierung von WLAN-Netzen derzeit nur durch einen willkürlich gewählten Namen (z.B. "WLAN Flughafen-Hamburg") und der IP-Adresse des Access Points.

Aus Ala-Laurila J. et al, Wireless LAN Access Network Architecture for Mobile Operators, IEEE Communications Magazine, Nov. 2001, Vol. 39, Seiten 82 bis 89 ist eine Netzwerkarchitektur bekannt, die Mobilteilnehmern eines GSM-Netzes die Benutzung eines Wireless LAN Netzwerks auf Grundlage einer auf einer SIM-Karte enthaltenen Identifikationsinformation ermöglicht.

Die der Erfindung zugrundeliegende Aufgabe ist es, ein Verfahren anzugeben, dass es erlaubt, ein Mobilfunkendgerät, insbesondere in einem oben beschriebenen, heterogenen Umfeld zu betreiben.

Diese Aufgabe wird ausgehend von dem Verfahren zum Betreiben von Endgeräten gemäß dem Oberbegriff des Anspruchs 1 durch dessen kennzeichnenden Merkmale gelöst.

Bei dem erfindungsgemäßen Verfahren zum Betreiben von Endgeräten eines, insbesondere gemäß dem UMTS-Standard funktionierenden, Mobilfunkkommunikationssystems in zumindest einem, insbesondere drahtlosen, beispielsweise nach einem IEEE 802.11 Standard funktionierenden, lokalen Netzwerks, ist auf dem Endgerät mindestens eine Zugangsinformation speicherbar, wobei die Zugangsinformation derart codiert ist, dass sie zumindest eine erste Identifikationsinformation für das Mobilfunkkommunikationssystem und zumindest eine zweite Identifikationsinformation für das lokale Netzwerk umfasst.

Durch das erfindungsgemäße Definieren einer Speicherungsmöglichkeit zumindest einer Zugangsinformation, die sowohl eine Identifikationsinformation für ein Mobilfunkkommunikationssystem als auch eine Identifikationsinformation für ein lokales Netzwerk enthält, wird eine besonders einfache und doch effektive Abwicklung eines Zugangs zu Telekommunikations- und Informationsnetzen geschaffen. Durch die Speicherung dieser Information auf den in diesen Netzen zu betreibenden Endgeräten wird den Anbietern solcher Netze die Kontrolle über die Vergabe solcher Zugänge gegeben, da beispielsweise bei Abschluss eines Nutzungsvertrages ein Angebotsspektrum vereinbart und bei der Herausgabe des entsprechenden Endgerätes durch entsprechende Speicherung von Zugangsinformationen berücksichtigt werden kann.

Vorzugsweise umfasst die zweite Identifikationsinformation eine erste Information über den Ort des lokalen Netzwerks, so dass im Endgerät ermittelt werden kann, ob an dem aktuellen Aufenthaltsort des Endgerätes eine Nutzung bzw. Einbuchung in ein lokales Netzwerk möglich ist.

Vorteilhafter Weise umfasst die zweite Identifikationsinformation eine zweite Information über den Typ des lokalen Netzwerks, so dass beispielsweise notwendige Parametereinstellungen seitens des Endgerätes vorgenommen werden können bzw. das Endgerät Rückschlüsse auf von dem Netz zu Verfügung gestellte Dienste gezogen werden können.

Letzteres lässt sich durch das Endgerät aufwandsärmer bestimmen, in dem man das Verfahren derartig implementiert, dass die zweite Identifikationsinformation eine dritte Information über zumindest einen angebotenen Dienst des lokalen Netzwerks umfasst.

Während Informationen über Ort, Typ und angebotenen Diensten vor allem für die Ermittlung und den Zugang zu öffentlichen lokalen Netzen ausreicht, erlaubt eine das lokale Netzwerk eindeutig identifizierbare vierte Information als Teil der zweiten Identifikationsinformation die dezidierte Auswahl von Netzen, die insbesondere dann notwendig ist, wenn entweder seitens des Providers des Mobilfunksystems oder seitens von Betreibern lokaler Netzes eine Beschränkung des Zugangs zu den jeweiligen lokalen Netzen gegeben ist.

Vorzugsweise wird die erste, zweite und oder dritte Information durch maximal drei dezimale Ziffern sowie die vierte Information durch maximal fünf dezimale Ziffern codiert, so dass für eine Codierung der zweiten Identifikationsinformation maximal sieben Byte notwendig sind.

Werden die zweiten Identifikationsinformationen derart organisiert als eine erste Liste gespeichert, dass die erste Liste diejenigen zweiten Identifikationsinformationen enthält, die zu lokalen Netzwerken zugeordnet sind, welche das Betreiben des Endgerätes innerhalb des lokalen Netzwerks erlauben, so lässt sich auf einfache Weise ein geeignetes, aktuell erreichbares sowie vor allem für das Endgerät zugängliches lokales Netz anhand den in der Tabelle gespeicherten Datensätzen ermitteln.

Alternativ oder ergänzend kann man die zweiten Identifikationsinformationen derart organisiert als eine erste Liste speichern, dass die erste Liste diejenigen zweiten Identifikationsinformationen enthält, die zu lokalen Netzwerken zugeordnet sind, welche das Betreiben des Endgerätes innerhalb des lokalen Netzwerks verbieten. Dies ist beispielsweise vorteilhaft anzuwenden, wenn Endgeräte des Mobilkommunikationssystems derart ausgestaltet sind, dass sie dem Nutzer, sich aktuell im Funkversorgungsbereich des Endgerätes befindende lokale Netze entweder selbständig oder durch Auswertung von Signalisierungen ermittelt, um nicht zugängliche Netze gefiltert, anzeigt.

Vorzugsweise wird die zumindest erste Zugangsinformation auf Vorrichtung zur Nutzeridentifikation, insbesondere einem USIM Modul, gespeichert. Hierdurch wird erreicht, dass Endgeräte von zur Realisierung des erfindungsgemäßen Verfahrens notwendigen Änderungen verschont wird. Zusätzlich bietet es den Vorteil, dass bei einem in Mobilfunkkommunikationssystemen häufig praktizierten Endgerätewechsel die Zugangsinformationen erhalten bleiben.

Weitere Vorteile und Einzelheiten der Erfindung werden anhand der folgenden Figuren erläutert. Es zeigt die
- Figur 1: ein beispielhaftes WLAN Netz,
- Figur 2: eine mögliche Netzarchitektur einer Anbindung eines drahtlosen lokalen Netzwerks (WLAN) an ein UMTS-Mobilfunkkommunikationssystem,
- Figur 3: Elemente eines User Equipments des beispielhaften WLAN Netzes,
- Figur 4: eine erfindungsgemäße Tabelle nutzbaren WLAN Netzen,
- Figur 5: eine erfindungsgemäße Tabelle nicht nutzbaren WLAN Netzen.

Ein Ausführungsbeispiel der Erfindung ist durch eine Implementierung des erfindungsgemäßen Verfahrens in einem heterogenen Umfeld bestehend aus einem gemäß dem UMTS Standard betriebenen Mobilfunkkommunikationssystem sowie mindestens einem lokalen gemäß dem IEEE 802.11 betriebenen lokalen drahtlosen Netzwerk (WLAN) gegeben. Daher werden im Folgenden zum Verständnis der Erfindung wesentliche Details dieser Systeme beschrieben und zur Wahrung der Übersicht folgende Abkürzungen eingeführt:
- 3GPP: Third Generation Partnership Project
- AAAL: Authentication Authorization Accounting Local
- AP: Access Point
- ATM: Asynchronous Transfer Modus
- AWPLMN: Allowed WLAN PLMN
- BDN: Broadband Data Networks
- B-ISDN: Broadband Integrated Services Digital Network
- EF: Elementary File
- FPLMN: Forbidden PLMN
- FWPLMN: Forbidden WLAN PLMN
- GGSN: Gateway GPRS Support Node
- GPRS: General Packet Radio Service
- Hiperlan/2: High Performance Local Area Network Type 2
- HPLMNwAcT: Home PLMN selector with Access Technology
- HSS: Home Subscriber Server
- IEEE: Institute of Electrical and Electronics Engineers
- IMSI: International Mobile Subscriber Identity
- IP: Internet Protocol
- IWU: Interworking Unit
- Mbit/s: Mega bits per second
- MCC: Mobile Country Code
- ME: Mobile Equipment
- MNC: Mobile Network Code
- MT: Mobile Terminal
- OPLMNwAcT: Operator controlled PLMN selector with Access Technology
- PCMCIA: Personal Computer Memory Card International Association
- PLMN: Public Land Mobile Network
- PLMNwAcT: User controlled PLMN selector with Access Technology
- RNC: Radio Network Controller
- SGSN: Serving GPRS Support Node
- SWAP: Shared Wireless Access Protocol
- TCP: Transmission Control Protocol
- UE: User Equipment
- UICC: Universal Integrated Circuit Card
- UMTS: Universal Mobile Telecommunications System
- USAT: USIM Application Toolkit
- USIM: Universal Subscriber Identity Module
- WAC: WLAN Application Code
- WLAN: Wireless Local Area Network
- WNC: WLAN Network Code
- WTC: WLAN Type Code

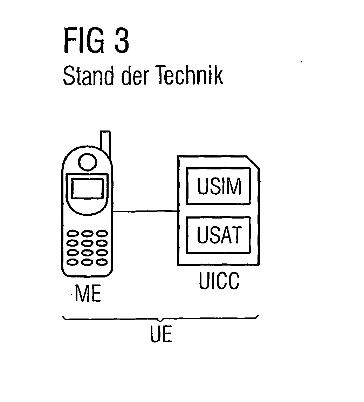

In UMTS besteht das eigentliche Terminal, dort als UE (User Equipment) bezeichnet, aus dem ME (Mobile Equipment) und der physikalischen Chipkarte UICC, siehe Figur 3. Auf der UICC ist standardmäßig das USIM (Universal Subscriber Identity Module) zusammen mit der USAT-Funktionalität (USIM Application Toolkit) implementiert. Das USIM ist unbedingt erforderlich, damit ein Mobilfunkteilnehmer sein ME in einem UMTS-Funknetz nutzen kann. Auf der USIM sind alle wichtigen Daten des Teilnehmer-Anschlusses gespeichert, die zur Identifizierung und zum Nachweis der Zugangsberechtigung (Authentifizierung) des Mobilfunkteilnehmers dienen sowie die Ver- und Entschlüsselung der Nutzer-Daten zum Schutz gegen Abhören und Verfälschen gewährleisten. Konkret werden die Daten auf der USIM in Form von "Elementary Files (EF)" gespeichert, siehe 3GPP TS 31.102: Characteristics of the USIM Application. Bspw. wird die IMSI (International Mobile Subscriber Identity) im EF_IMSI und die Schlüssel zur Ver- und Entschlüsselung der Nutzerdaten im EF_Keys gespeichert.

Des Weiteren sind auf der USIM entsprechende Listen von PLMNs (Public Land Mobile Network), d.h. öffentlichen Mobilfunknetzen, gespeichert, auf deren Basis sich ein Mobilfunkteilnehmer in Abhängigkeit seines jeweiligen Aufenthaltsortes in einem Mobilfunknetz einbuchen kann:
- **EF_HPLMNwAcT (Home PLMN selector with Access Technology) :** Diese Liste enthält die zu einem Mobilfunkteilnehmer zugeordneten Identitäten seines Heimat-Mobilfunknetzes (Home PLMN) mit Angabe der Funkübertragungstechnologie.
- **EF_PLMNwAcT (User controlled PLMN selector with Access Technology):** Diese Liste enthält die vom Mobilfunkteilnehmer kontrollierten Identitäten von Mobilfunknetzen mit Angabe der jeweiligen Funkübertragungstechnologie.
- **EF_OPLMNwAcT (Operator controlled PLMN selector with Access Technology):** Diese Liste enthält die vom Netzwerk-Operator kontrollierten Identitäten von Mobilfunknetzen mit Angabe der jeweiligen Funkübertragungstechnologie.
- **EF_FPLMN (Forbidden PLMNs):** Diese Liste enthält die Identitäten von gesperrten Mobilfunknetzen, in der sich ein Mobilfunkteilnehmer nicht einbuchen darf.

In den o.g. Listen sind die jeweiligen PLMNs durch eindeutige PLMN-Identitäten identifiziert. Die PLMN-Identitäten setzen sich dabei aus den folgenden zwei Komponenten zusammen:
- Der Mobile Country Code (MCC) besteht aus drei Ziffern (dezimal). Der MCC identifiziert auf eindeutiger Weise das Land, in der das Mobilfunknetz betrieben wird. Bspw. ist für Deutschland der MCC = "262" und für Grossbritannien MCC = "234".
- Der Mobile Network Code (MNC) besteht aus 3 Ziffern (dezimal) und identifiziert in Abhängigkeit vom MCC auf eindeutiger Weise das Mobilfunknetz. Bspw. sind für Deutschland folgende Codes definiert: MNC=001 für T-Mobil, MNC=002 für Vodafone, MNC=003 für E-Plus und MNC=007 für Viag.

Der erfindungswesentliche Kern ist nun zum einen ein Verfahren zur Codierung von WLAN-Identitäten zur eindeutigen Identifizierung und Authentifizierung von WLAN-Netzen und zum anderen der WLAN-Zugang von UMTS-Nutzern auf Basis von WLAN-Identitätslisten, die auf der USIM gespeichert sind. Es wird dabei vorausgesetzt, dass das UMTS-Terminal auch über ein WLAN-Modul der jeweiligen Technologie verfügt. Eine USIMbasierte Lösung bietet folgende Vorteile:
- WLAN-Netze können auf eindeutiger Weise identifiziert und authentifiziert werden.
- Der Zugang von UMTS-Teilnehmern in WLAN-Netze wird auf unkomplizierte Weise realisiert.
- UMTS- und WLAN-Provider können den WLAN-Zugang für bestimmte Netze bzw. Klassen von Netzen steuern.

Zur eindeutigen Identifizierung und Authentifizierung von WLAN-Netzen werden diese erfindungsgemäß mit einer Identität codiert, die sich aus folgenden vier Komponenten zusammensetzt:
- **WLAN-Identität = MCC + WTC + WAC + WNC,** wobei
- der **Mobile Country Code (MCC)** aus drei Ziffern (dezimal) besteht und auf eindeutiger Weise das Land identifiziert, in der das WLAN-Netz betrieben wird,
- der **WLAN Type Code (WTC)** aus max. drei Ziffern (dezimal) besteht und auf eindeutiger Weise den Typ des WLAN-Netzes identifiziert,
- der **WLAN Application Code (WAC)** aus max. drei Ziffern (dezimal) besteht und auf eindeutiger Weise die WLAN-Anwendung identifiziert,
- der **WLAN Network Code (WNC)** aus max. 5 Ziffern (dezimal) besteht und in Abhängigkeit vom MCC, WTC und WAC auf eindeutiger Weise das WLAN-Netz identifiziert.

Die Länge einer WLAN-Identität besteht aus maximal 14 Ziffern (dezimal). Für die Definition von WTC und WAC sind beliebige Kombinationen möglich. Bspw. könnten als WLAN Type Codes die folgenden definiert werden:
- "001" = Public, Typ 1
- "002" = Public, Typ 2
- "003" = Privat, Typ 1
- "004" = Privat, Typ 2
- usw.

Entsprechend könnten als WLAN Application Codes die folgenden definiert werden:
- "001" = Flughafen
- "002" = Hotel, Kategorie Luxus
- "003" = Hotel, Kategorie Mittelklasse
- "004" = Bahnhof
- "005" = Coffee-Shop
- usw.

Der WLAN-Zugang bestimmt sich alternativ oder ergänzend auf Basis von WLAN-Identitätslisten. Hierzu werden auf der USIM die Dateien EF_AWPLMN (Allowed WLAN PLMNs) und EF_FWPLMN (Forbidden WLAN PLMNs) definiert. Die Datei EF_AWPLMN enthält in Form einer Liste die Identitäten die für einen UMTS-Teilnehmer erlaubten WLAN-Netze und soll eine Länge von n * 7 Bytes haben. Entsprechend enthält die Datei EF_FWPLMN in Form einer Liste die Identitäten die für einen UMTS-Teilnehmer verbotenen WLAN-Netze und soll eine Länge von n * 7 Bytes haben. Der Parameter n gibt die Anzahl der aufgelisteten WLAN-Netze an. Pro aufgelisteten WLAN-Netz werden für die Identität 7 Bytes allokiert. Die 7 Bytes ergeben sich aus der Tatsache, dass jede einzelne Ziffer der WLAN-Identität mit jeweils 4 Bits codiert werden. Tabelle 1 zeigt ein Beispiel für die Struktur der Datei EF_AWPLMN bzw. EF_FWPLMN.

**Tabelle 1: Struktur der Datei EF AWPLMN bzw. EF FWPLMN**

| **Bytes** | **Beschreibung** | **Länge** |
|---|---|---|
| 1 bis 7 | 1. WLAN PLMN | 7 Bytes |
| 8 bis 14 | 2. WLAN PLMN | 7 Bytes |
| ... | ... | ... |
| (7*n-6) bis (7*n) | N. WLAN PLMN | 7 Bytes |

Diese WLAN-Identitätslisten ermöglichen es, dass einem UMTS-Nutzer bei Vertragsabschluss mit seinem UMTS- oder WLAN-Provider entsprechende WLAN-Zugänge erlaubt oder gesperrt werden können, je nachdem, ob er neben UMTS auch WLAN nutzen will oder nicht. Des Weiteren erlauben die WLAN-Identitätslisten die dynamische Handhabe der erlaubten bzw. gesperrten WLANs auch während der Vertragslaufzeit.

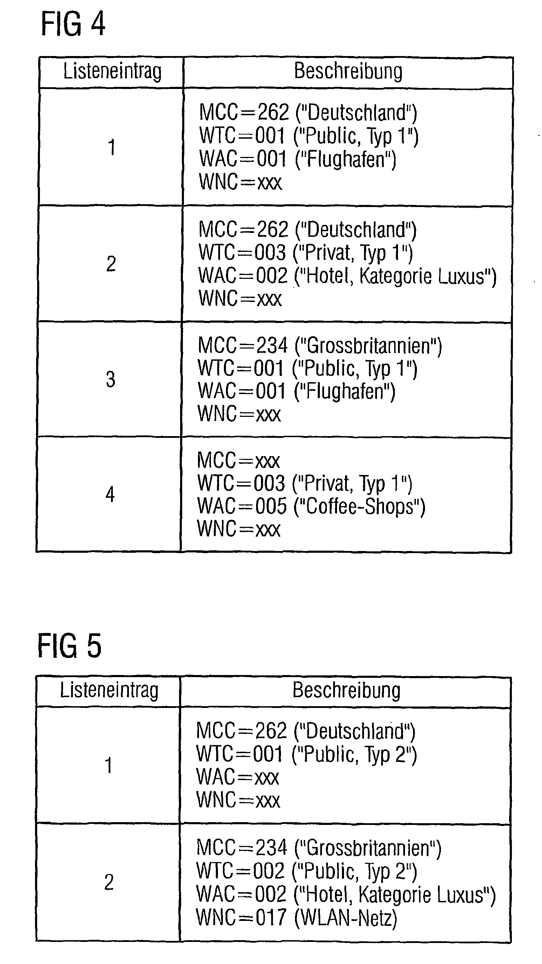

Zur Erläuterung der Anwendung der erfindungsgemäßen Verfahrensweise wird angenommen, dass sich ein Mobilfunkteilnehmer in Deutschland auf einem Flughafen befindet, in der er mit seinem UMTS-Terminal über ein WLAN-Funknetz, basierend auf der IEEE 802.11b-Technologie, eine Internet-Verbindung aufbauen will. Sein Terminal verfügt über einen entsprechenden WLAN-Modul, und auf seiner USIM sind in der Datei EF_AWPLMN, wie nach Figur 4, die erlaubten WLAN-Netze und in der Datei EF_FWPLMN, wie nach Figur 5, die gesperrten WLAN-Netze gespeichert.

Auf seiner USIM sind in der Datei EF_AWPLMN 4 Einträge enthalten. Nach Eintrag 1 wird ihm in Deutschland einen WLAN-Zugang in jedem WLAN-Netz vom Typ "Public, Typ 1" und Anwendung "Flughafen" erlaubt. Dasselbe gilt nach Eintrag 2 auch für alle WLAN-Netze vom Typ "Privat, Typ 1" und Anwendung "Hotel, Kategorie Luxus". Nach Eintrag 3 hat er auch in Grossbritannien einen WLAN-Zugang in jedem WLAN-Netz vom Typ "Public, Typ 1" und Anwendung "Flughafen". Und nach Eintrag 4 hat er weltweit Zugang in alle WLAN-Netze vom Typ "Privat, Typ 1" und Anwendung "Coffee-Shops".

Auf seiner USIM sind in der Datei EF_FWPLMN 2 Einträge enthalten. Nach Eintrag 1 wird ihm in Deutschland ein WLAN-Zugang in jedem WLAN-Netz vom Typ "Public, Typ 2" unabhängig von der Anwendung nicht erlaubt. Nach Eintrag 2 ist sein Zugang zu einem bestimmten WLAN-Netz in Grossbritannien mit WNC=017, Typ "Public, Typ 2" und Anwendung "Hotel, Kategorie Luxus" nicht erlaubt.

Da nach Eintrag 1 in EF_AWPLMN ein WLAN-Zugang in Deutschland von einem Flughafen erlaubt ist, kann der Mobilfunkteilnehmer mit seinem UMTS-Terminal über sein WLAN-Modul eine Internet-Verbindung aufbauen.

Die Erfindung ist nicht auf dieses Ausführungsbeispiel beschränkt. Vielmehr umfasst sie alle im Rahmen der fachmännischen Fähigkeiten möglichen Implementierungen, die den erfindungswesentlichen Kern - Codierung von drahtlosen lokalen Netzen bezeichnenden Identitäten zur eindeutigen Identifizierung und Authentifizierung und Realisierung eines Zugangs zu drahtlosen lokalen Netzen von UMTS-Nutzern auf Basis von drahtlosen lokalen Netze beinhaltenden Identitätslisten steuert, die auf der USIM im UMTS-Terminal gespeichert werden und somit eine eindeutige Identifizierung und Authentifizierung von lokalen drahtlosen Netzen für zukünftige UMTS-Nutzer auf unkomplizierte Weise ermöglicht sowie UMTS-Providern und Betreibern lokaler Netzwerke geeignete Mittel zur Verfügung stellt, den Netz-Zugang auf unkomplizierte Weise zu steuern.

## Patentansprüche

1. Verfahren zum Betreiben von Endgeräten eines, insbesondere gemäß dem UMTS-Standard funktionierenden, Mobilfunkkommunikationssystems in zumindest einem drahtlosen lokalen Netzwerk, insbesondere "Wireless Lokal Area Network" WLAN, bei dem auf dem Endgerät mindestens eine Zugangsinformation gespeichert wird, wobei die Zugangsinformation derart codiert ist, dass sie zumindest eine erste Identifikationsinformation für das Mobilfunkkommunikationssystem und zumindest eine zweite Identifikationsinformation für das lokale Netzwerk umfasst,
**dadurch gekennzeichnet,**
- **dass** die zweite Identifikationsinformation eine erste Information (MCC) über den Ort des lokalen Netzwerks umfasst,
- **dass** die zweite Identifikationsinformation eine zweite Information (WTC) über den Typ des lokalen Netzwerks umfasst und
- **dass** die zweite Identifikationsinformation eine dritte Information (WAC) über zumindest einen angebotenen Dienst des lokalen Netzwerks umfasst.

2. Verfahren nach Anspruch 1 **dadurch gekennzeichnet, dass** die zweite Identifikationsinformation eine das lokale Netzwerk eindeutig identifizierbare vierte Information (WNC) umfasst.

3. Verfahren nach einem der Ansprüche 1 bis 2, **dadurch gekennzeichnet, dass** die erste, zweite und/oder dritte Information durch maximal drei dezimale Ziffern codiert wird.

4. Verfahren nach Anspruch 1 bis 3, **dadurch gekennzeichnet, dass** die vierte Information durch maximal fünf dezimale Ziffern codiert wird.

5. Verfahren nach einem der vorhergehenden Ansprüche, **dadurch gekennzeichnet, dass** die zweiten Identifikationsinformationen derart organisiert als eine erste Liste gespeichert werden, dass die erste Liste diejenigen zweiten Identifikationsinformationen enthält, die zu lokalen Netzwerken zugeordnet sind, welche das Betreiben des Endgerätes innerhalb des lokalen Netzwerks erlauben.

6. Verfahren nach Anspruch 2, **dadurch gekennzeichnet, dass** die zweiten Identifikationsinformationen derart organisiert als eine erste Liste gespeichert werden, dass die erste Liste diejenigen zweiten Identifikationsinformationen enthält, die zu lokalen Netzwerken zugeordnet sind, welche das Betreiben des Endgerätes innerhalb des lokalen Netzwerks verbieten.

7. Verfahren nach einem der vorhergehenden Ansprüche, **dadurch gekennzeichnet, dass** die zumindest erste Zugangsinformation auf einer Vorrichtung zur Nutzeridentifikation, insbesondere einem "Universal Subscriber Identity Module" USIM Modul, gespeichert wird.

8. Speichervorrichtung zur Durchführung eines Verfahrens, **gekennzeichnet durch** Mittel zur Durchführung aller Verfahrensschritte nach einem der Ansprüche 1-6.

9. Telekommunikationsgerät **dadurch gekennzeichnet, dass** es die Speichervorrichtung nach Anspruch 8 beinhaltet.

## Claims

1. Method for operating terminals of a mobile radio communication system, in particular a mobile radio communication system operating in accordance with the UMTS standard, in at least one local wireless network, in particular a "wireless local area network" WLAN, in which at least one item of access information can be stored on the terminal, with the access information being encoded in such a way that it comprises at least one first item of identification information for the mobile radio communication system and at least one second item of identification information for the local area network,
**characterised in that**
- the second item of identification information comprises a first item of information (MCC) indicating the location of the local area network,
- the second item of identification information comprises a second item of information (WTC) indicating the type of the local area network, and
- the second item of identification information comprises a third item of information (WAC) indicating at least one service provided by the local area network.

2. Method according to claim 1, **characterised in that** the second item of identification information comprises a fourth item of information (WNC) uniquely identifying the local area network.

3. Method according to claims 1 to 2, **characterised in that** the first, second and/or third items of information are encoded by means of a maximum of three decimal digits.

4. Method according to claims 1 to 3, **characterised in that** the fourth item of information is encoded by means of a maximum of five decimal digits.

5. Method according to one of the preceding claims, **characterised in that** the second items of identification information are stored as a first list organised in such a way that the first list contains those second items of identification information that are assigned to local area networks which allow the operation of the terminal within the local area network.

6. Method according to claim 2, **characterised in that** the second items of identification information are stored as a first list organised in such a way that the first list contains those second items of identification information that are assigned to local area networks which forbid the operation of the terminal within the local area network.

7. Method according to one of the preceding claims, **characterised in that** the at least first item of access information is stored on a device serving for user identification, in particular a "Universal Subscriber Identity Module" USIM module.

8. Storage device for implementing a method, **characterised by** means for implementing all the method steps according to one of claims 1 to 6.

9. Telecommunication device **characterised in that** it contains the storage device according to claim 8.

## Revendications

1. Procédé pour l'exploitation de terminaux d'un système de radiocommunication mobile, en particulier fonctionnant selon le standard UMTS, dans au moins un réseau local sans fil, en particulier un "Wireless Local Area Network" WLAN, dans lequel au moins une information d'accès est mémorisée sur le terminal, l'information d'accès étant codée de telle sorte qu'elle comprend au moins une première information d'identification pour le système de radiocommunication mobile et au moins une seconde information d'identification pour le réseau local,
**caractérisé en ce que**
- la seconde information d'identification comprend une première information (MCC) sur l'emplacement du réseau local,
- **en ce que** la seconde information d'identification comprend une seconde information (WTC) sur le type du réseau local et
- **en ce que** la seconde information d'identification comprend une troisième information (WAC) sur au moins un service offert du réseau local.

2. Procédé selon la revendication 1,
**caractérisé en ce que** la seconde information d'identification comprend une quatrième information (WNC) qui peut identifier univoquement le réseau local.

3. Procédé selon l'une quelconque des revendications 1 à 2, **caractérisé en ce que** la première, la seconde et/ou la troisième informations sont codées par au maximum trois chiffres décimaux.

4. Procédé selon l'une des revendications 1 à 3, **caractérisé en ce que** la quatrième information est codée par au maximum cinq chiffres décimaux.

5. Procédé selon l'une quelconque des revendications précédentes, **caractérisé en ce que** les secondes informations d'identification sont mémorisées sous la forme d'une première liste organisées de telle sorte que la première liste contient les secondes informations d'identification, qui sont attribuées à des réseaux locaux, lesquels permettent l'exploitation du terminal à l'intérieur du réseau local.

6. Procédé selon la revendication 2, **caractérisé en ce que** les secondes informations d'identification sont mémorisées sous la forme d'une première liste organisées de telle sorte que la première liste contient les secondes informations d'identification qui sont attribuées à des réseaux locaux, lesquels interdisent l'exploitation du terminal à l'intérieur du réseau local.

7. Procédé selon l'une quelconque des revendications précédentes, **caractérisé en ce que** la au moins première information d'accès est mémorisée sur un dispositif pour l'identification d'utilisateur, en particulier un module "Universal Subscriber Identity Module" USIM.

8. Dispositif de mémorisation pour la mise en oeuvre d'un procédé, **caractérisé par** des moyens pour la mise en oeuvre de toutes les étapes du procédé selon l'une quelconque des revendications 1 à 6.

9. Appareil de télécommunication, **caractérisé en ce qu'**il contient le dispositif de mémorisation selon la revendication 8.
